# EUROPÄISCHE PATENTANMELDUNG

(11) **EP 3 691 095 A1**
(43) Veröffentlichungstag der Anmeldung: **05.08.2020**
(21) Anmeldenummer: 20154269.3
(22) Anmeldetag: 29.01.2020
(51) Int. Cl.: H02K 15/02

(54) **VERFAHREN ZUM MECHANISCHEN BEARBEITEN EINES ROTORS EINER ELEKTRISCHEN MASCHINE**

(30) Priorität: 01.02.2019 DE 102019201296
(71) Anmelder: ZF Friedrichshafen AG, 88046 Friedrichshafen (DE)
(72) Erfinder: Ackermann, Thomas, 88213 Ravensburg (DE); Mailänder, Heiko, 88046 Friedrichshafen (DE)
(74) Vertreter: ZF Friedrichshafen AG

(57) **Zusammenfassung**

Es wird ein Verfahren zum mechanischen Bearbeiten eines Blechpaketes (2) eines Rotors (1) einer elektrischen Maschine vorgeschlagen, wobei die Außenoberfläche oder die Innenoberfläche des Blechpaketes (2) des Rotors (1) mittels Einstechdrehen oder Schäldrehen bearbeitet wird, sodass ein vorbestimmtes Endmaß als Außendurchmesser oder als Innendurchmesser an dem Blechpaket (2) des Rotors (1) realisiert wird. Ferner wird ein Rotor (1) einer elektrischen Maschine mit einem aus mehreren axial nebeneinander angeordneten und voneinander isolierten Blechen (3) gebildeten Blechpaket (2) vorgeschlagen, wobei der mittels Schäldrehen oder Einstechdrehen nachbearbeitete Außendurchmesser oder der Innendurchmesser des Blechpaketes (2) ein vorbestimmtes Endmaß aufweist.

## Beschreibung

Die vorliegende Erfindung betrifft ein Verfahren zum mechanischen Bearbeiten eines Rotors einer elektrischen Maschine. Ferner betrifft die vorliegende Erfindung einen bearbeiteten Rotor einer elektrischen Maschine.

Elektrische Maschinen bestehen aus einem Rotor und einem Stator. Der Rotor umfasst ein Blechpaket, welches aus axial nebeneinander angeordneten und voneinander isolierten Blechen besteht. Die Bleche sind mit einer Isolierung überzogen, sodass benachbarte Bleche voneinander getrennt und isoliert sind. Der Rotor wird mithilfe eines Druckgussverfahrens mit einem Medium, wie zum Beispiel Aluminium oder Kupfer gefüllt. Dies ist notwendig, um die erforderlichen elektrischen bzw. magnetischen Eigenschaften zu erreichen. Während des Druckgusses kommt es verfahrensbedingt zur Deformation des Blechpaketes des Rotors. Demzufolge ist eine mechanische Bearbeitung bzw. Nachbearbeitung des Blechpaketes erforderlich, um vorbestimmte geometrische Spezifikationen sicherzustellen. Bei der mechanischen Bearbeitung werden beim Drehprozeß mit axialer Vorschubbewegung benachbarte Bleche des Blechpaketes durch axial verlaufende Spane miteinander verbunden, sodass die Isolationsschicht überbrückt wird und ein unerwünschter Kurzschluss auftritt. Dadurch wird die Leistungsfähigkeit der elektrischen Maschine reduziert und es kommt zu unerwünschten thermischen Wärmeentwicklungen.

Demzufolge liegt der vorliegenden Erfindung die Aufgabe zugrunde, ein Verfahren zur mechanischen Bearbeitung eines Rotors einer elektrischen Maschine und einen bearbeiteten Rotor vorzuschlagen, mit bzw. bei dem Verlustleistungen und thermische Erwärmungen vermieden werden.

Diese Aufgabe wird erfindungsgemäß durch die Merkmale des Patentanspruchs 1 bzw. 11 gelöst, wobei sich vorteilhafte und beanspruchte Weiterbildungen aus den Unteransprüchen und der Beschreibung sowie den Zeichnungen ergeben.

Somit wird ein Verfahren zum mechanischen Bearbeiten bzw. Nachbearbeiten eines ein Blechpaket umfassenden Rotors einer elektrischen Maschine vorgeschlagen, wobei die Außenoberfläche oder die Innenoberfläche des Blechpaketes des Rotors mittels Einstechdrehen oder Schäldrehen bearbeitet wird, sodass ein vorbestimmtes bzw. vorgegebenes Endmaß an dem Außendurchmesser oder an dem Innendurchmesser des Blechpaketes des Rotors realisiert wird.

Auf diese Weise wird eine optimale mechanische Nachbearbeitung des Rotors ohne axial verlaufende Spanbildung ermöglicht, sodass durch die erfindungsgemäß durchgeführten Nachbearbeitungen keine Verlustleistung oder unerwünschte thermische Erwärmungen an dem Rotor beim Betrieb der elektrischen Maschine auftreten. Bei der mechanischen Nachbearbeitung werden keine leitenden Verbindungen an den Trennstellen zwischen benachbarten Blechen des Blechpaketes erzeugt, sodass auch nach der Bearbeitung eine Trennung bzw. Isolation zwischen den einzelnen Blechen des Blechpaketes gewährleistet wird.

Im Rahmen einer Weiterbildung der Erfindung kann vorgesehen sein, dass zum mechanischen Bearbeiten der Außenoberfläche oder der Innenoberfläche des Blechpaketes des Rotors zumindest ein Einstechwerkzeug oder zumindest ein Schälwerkzeug verwendet wird.

Im Rahmen des Einstechdrehens werden ein oder mehrere Einstechwerkzeuge oder das Blechpaket des Rotors radial zugestellt, sodass die Außenoberfläche oder die Innenoberfläche des rotierenden Blechpaketes des Rotors auf das vorbestimmte Endmaß bearbeitet werden kann. Unter dem Begriff Zustellen wird verstanden, dass entweder das Einstechwerkzeug oder das Blechpaket derart bewegt wird, dass eine Bearbeitung der Außenoberfläche oder Innenoberfläche ermöglich wird. Demzufolge kann entweder das rotierende Blechpaket radial zum Einstechwerkzeug bewegt werden oder das Einstechwerkzeug wird in Richtung des rotierenden Blechpaketes bewegt.

Wenn das vorbestimmte Endmaß an dem Außendurchmesser oder dem Innendurchmesser des Blechpaketes durch das Abnehmen bzw. das Zerspanen des Materials erreicht worden ist, wird im Rahmen des Verfahrens zur Nachbearbeitung des Rotors entweder das Einstechwerkzeug oder das Blechpaket radial zurückgestellt, sodass der mechanische Kontakt zwischen dem Einstechwerkzeug und der Außenoberfläche oder der Innenoberfläche des Blechpaketes wieder gelöst wird. Anschließend wird das Einstechwerkzeug oder das Blechpaket axial zugestellt bzw. bewegt, sodass dem Einstechwerkzeug eine unbearbeitete Außenoberfläche oder Innenoberfläche des Blechpaketes des Rotors zugeordnet wird. Dadurch, dass die axiale Zustellung nicht während der Bearbeitung durchgeführt wird, wird sichergestellt, dass keine axialen Spanverläufe auftreten, sodass benachbarte Bleche des Blechpaketes nicht miteinander leitend verbunden werden. Nach der axialen Zustellung wird zum weiteren Bearbeiten das Einstechwerkzeug oder das Blechpaket wieder radial zugestellt, um das vorbestimmte Endmaß auch an dem unbearbeiteten Außendurchmesser oder Innendurchmesser zu erreichen. Diese Verfahrensweise wird wiederholt, bis die komplette axiale Breite des Blechpaketes vollständig auf Endmaß bearbeitet ist.

Im Rahmen einer Weiterbildung der Erfindung kann auch vorgesehen sein, dass beim Schäldrehen bzw. Rotationsdrehen ein oder mehrere Schälwerkzeuge oder das Blechpaket radial zugestellt werden, sodass die Außenoberfläche oder die Innenoberfläche des rotierenden Blechpaketes des Rotors auf das vorbestimmte Endmaß bearbeitet wird. Auch bei dieser Art der Nachbearbeitung im Rahmen des Schäldrehens ist es möglich, dass entweder das Schälwerkzeug oder alternativ auch das Blechpaket radial zugestellt bzw. radial bewegt werden kann.

Im Rahmen einer Weiterbildung der vorliegenden Erfindung ist vorgesehen, dass das Schälwerkzeug während der Bearbeitung derart geschwenkt wird, dass eine Schneideverdrehung des Schälwerkzeuges durchgeführt wird. Durch die Verschwenkung der Schneide des Schälwerkzeuges ist es in vorteilhafter Weise auch möglich, dass eine axiale Bewegung bzw. eine axiale Zustellung während der Bearbeitung durchgeführt wird. Da die Schneide des Schälwerkzeuge derart schneidfähig bzw. scharf ist, dass eine Zerdrückung der Bleche des Blechpaketes oder eine Kurzschlussspanbildung während der vorgeschlagenen Bearbeitung sicher verhindert wird.

Unabhängig von den vorgeschlagenen Bearbeitungsverfahren ist es möglich, diese auch ohne Schmier- und Kühlmittelzugabe durchzuführen.

Ein weiterer Aspekt der vorliegenden Erfindung sieht vor, dass auch ein Rotor einer elektrischen Maschine mit einem aus mehreren axial nebeneinander angeordneten und voneinander isolierten Blechen gebildeten Blechpaket beansprucht wird, wobei der mit mittels Schäldrehen oder Einstechdrehen nachbearbeitete Außendurchmesser oder Innendurchmesser des Blechpaketes ein vorbestimmtes Endmaß aufweist.

Nachfolgend wird die vorliegende Erfindung anhand der Zeichnungen weiter erläutert. Es zeigen:
Figur 1 eine schematische dreidimensionale Ansicht eines aus einem Blechpaket bestehenden Rotors einer elektrischen Maschine vor Beginn der Nachbearbeitung mit einem erfindungsgemäßen Verfahren mittels Einstechdrehen;
Figur 2 eine schematische dreidimensionale Ansicht mit einem radial zugestellten Einstechwerkzeug;
Figur 3 eine schematische dreidimensionale Ansicht mit einem radial zurückgestellten Einstechwerkzeug und der axialen Zustellung;
Figur 4 eine schematische dreidimensionale Ansicht des Blechpakets vor Beginn der Nachbearbeitung mit dem erfindungsgemäßen Verfahren mittels Schäldrehen;
Figur 5 eine schematische dreidimensionale Ansicht mit einem radial zugestellten Schälwerkzeug;
Figur 6 eine schematische Ansicht des Schälwerkzeuges mit einer Schneideverdrehung während der Bearbeitung des Blechpaketes;
Figur 7 eine schematische Ansicht des Schälwerkzeuges während der radialen Zurückstellung;
Figur 8 eine schematische Ansicht des Schälwerkzeuges nach der radialen Zurückstellung und der Schneideverdrehung in die Ausgangslage; und
Figur 9 eine schematische Ansicht des Schälwerkzeuges bei einer axialen Zustellung im radial zurückgestellten Zustand.

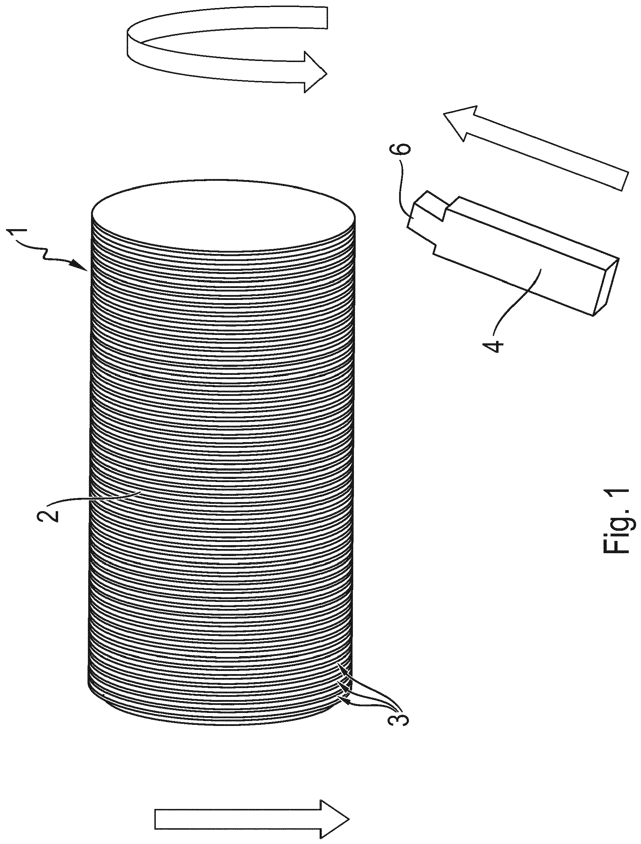

In den Figuren 1 bis 9 sind verschiedene Ansichten eines nachzubearbeitenden Rotors 1 einer elektrischen Maschine oder dergleichen beispielhaft dargestellt. Der Rotor 1 besteht aus einem zylinderförmigen Blechpaket 2, welches wiederum mehrere axial nebeneinander angeordnete und voneinander isolierte Blechen 3 umfasst.

Anhand der Figuren 1 bis 9 wird ein erfindungsgemäßes Verfahren zum mechanischen Bearbeiten bzw. Nachbearbeiten des Rotors 1 beschrieben, wobei eine Außenoberfläche oder eine Innenoberfläche eines rotierenden Blechpaketes 2 des Rotors 1 mittels Einstechdrehen oder Schäldrehen bearbeitet wird, sodass ein vorbestimmtes Endmaß 7 an dem Außendurchmesser oder an dem Innendurchmesser an dem Blechpaket 2 des Rotors 1 realisiert wird. Zum Bearbeiten der Außenoberfläche oder der Innenoberfläche des Blechpaketes 2 des Rotors 1 wird zumindest ein Einstechwerkzeug 4 oder zumindest ein Schälwerkzeug 5 verwendet.

Die Figuren 1 bis 3 zeigen beispielhaft das Verfahren, bei dem das Blechpaket 2 des Rotors 1 mittels Einstechdrehen bearbeitet wird. In Figur 1 ist das Einstechwerkzeug 4 oder das Blechpaket 2 des Rotors 1 beim radialen Zustellen gezeigt. Hierbei ist es möglich, dass entweder das Einstechwerkzeug 4 oder das sich drehende Blechpaket 2 zugestellt bzw. radial bewegt wird. Dies wird durch die entsprechenden Pfeile in Figur 1 angedeutet. Unabhängig davon, ob das Einstechwerkzeug 4 oder das rotierende Blechpaket 2 radial zugestellt wird, wird durch die radiale Zustellung die Außenoberfläche oder die Innenoberfläche des Blechpaketes 2 des Rotors 1 auf das vorbestimmte Endmaß 7 bezogen auf den Außen- bzw. Innendurchmesser bearbeitet. Bei der hier lediglich beispielhaft dargestellten Ausführungsvariante wird die Außenoberfläche des Blechpaketes 2 bearbeitet, sodass ein vorgestelltes Endmaß 7 bei dem Außendurchmesser des Blechpaketes 2 erreicht wird.

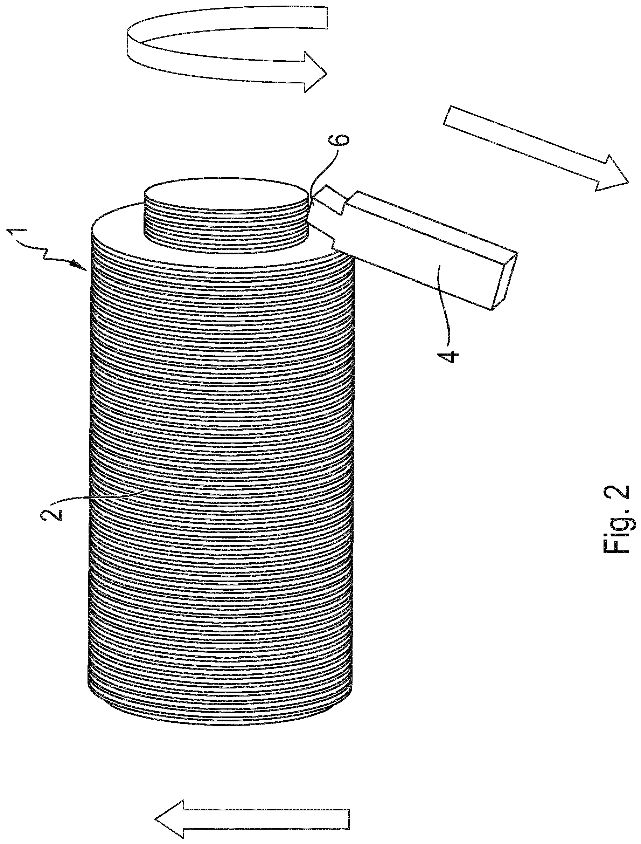

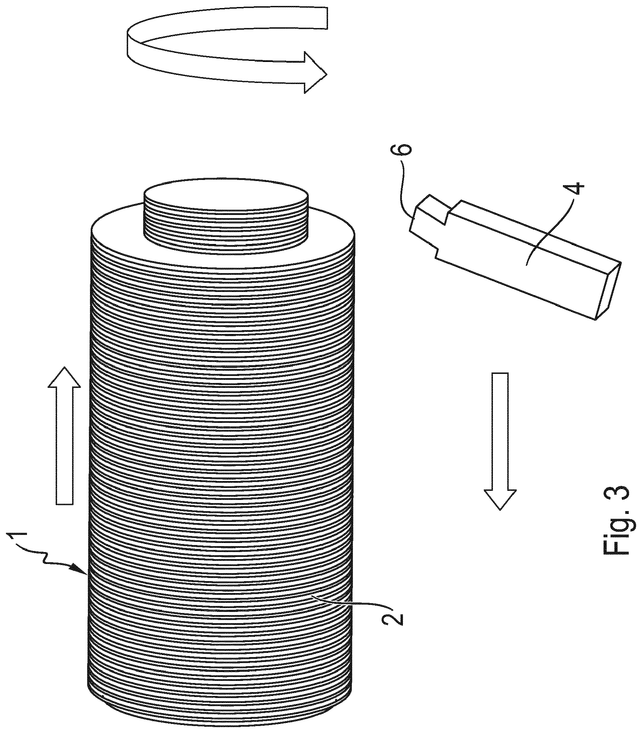

In Figur 2 ist der radial zugestellte Zustand des Einstechwerkzeuges 4 dargestellt, wobei durch die Pfeile in Figur 2 angedeutet wird, dass nach Erreichen des vorbestimmten Endmaßes 7 an dem Außendurchmesser das Einstechwerkzeug 4 oder das Blechpaket 2 des Rotors 1 radial zurückgestellt wird. In Figur 3 ist dieser zurückgestellte Zustand dargestellt, wobei anschließend das Einstechwerkzeug 4 oder das Blechpaket 2 des Rotors 1 axial zugestellt wird, welches ebenfalls durch Pfeile in Figur 3 angedeutet ist. Durch das axiale Zustellen wird dem Einstechwerkzeug 4 eine unbearbeitete Außenoberfläche bzw. Innenoberfläche des Blechpaketes zweites Rotors 1 zugeordnet, sodass zum weiteren Bearbeiten das Einstechwerkzeug oder das Blechpaket 2 des Rotors 1 wieder radial zugestellt werden kann.

Die vorbeschriebenen Verfahrensschritte werden je nach Verhältnis zwischen Schneidbreite des Einstechwerkzeuges 4 und axialer Breite des Blechpaketes 2 wiederholt, bis die gesamte Breite der zu bearbeitenden Außenoberfläche bzw. Innenoberfläche des Blechpaketes 2 des Rotors 1 das vorbestimmte Endmaß 7 aufweist.

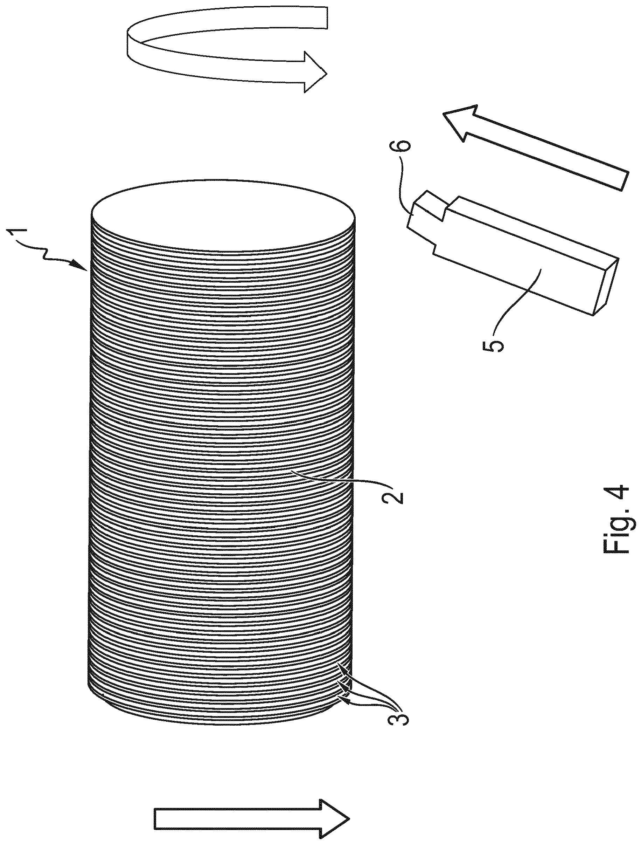

Die Figuren 4 bis 9 zeigen beispielhaft ein Bearbeitungsverfahren, bei dem das Blechpaket 2 des Rotors 1 mittels Schäldrehen bzw. Rotationsdrehen bearbeitet wird. In Figur 4 wird zum Bearbeiten das Schälwerkzeug 5 oder das rotierende Blechpaket 2 des Rotors 1 radial zugestellt, welches durch entsprechende Pfeile angedeutet ist. Ebenso wie beim Einstechdrehen ist es möglich, dass entweder das Schälwerkzeug 5 oder das Blechpaket 2 radial zugestellt bzw. bewegt wird, sodass die Außenoberfläche oder die Innenoberfläche des Blechpaketes 2 des Rotors 1 auf das vorbestimmte Endmaß 7 bearbeitet wird. In den Figuren 4 bis 9 wird das Schäldrehen beispielhaft lediglich bei der Bearbeitung des Außendurchmessers dargestellt. Analog könnte auch der Innendurchmesser des Blechpaketes 2 bearbeitet werden.

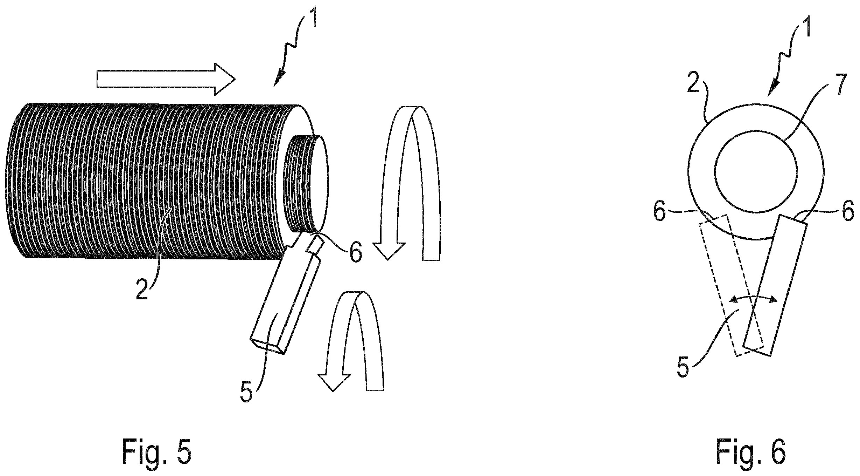

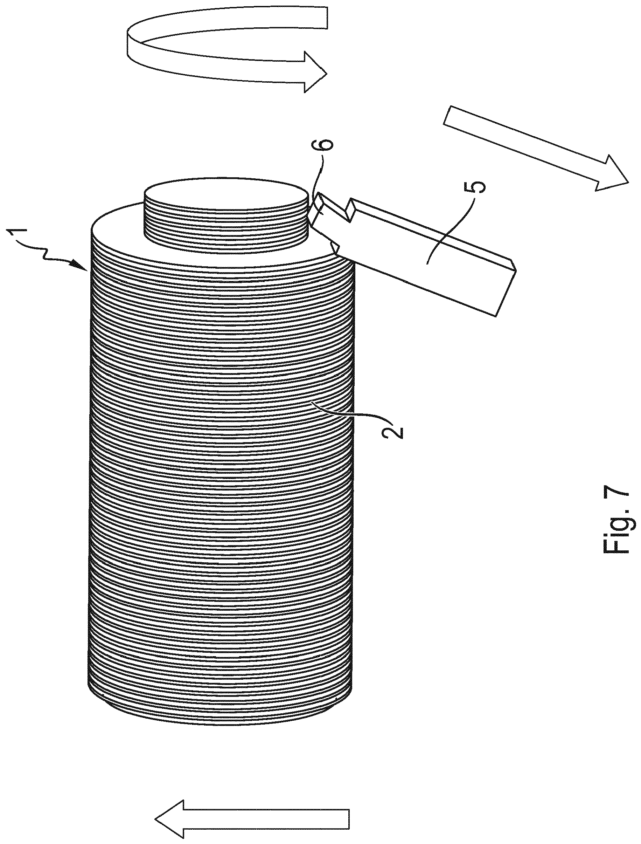

In Figur 5 ist der radial zugestellte Zustand des Schälwerkzeuges 5 an dem Blechpaket 2 des Rotors 1 gezeigt. Durch einen entsprechenden Pfeil in Figur 5 und anhand der Darstellung gemäß Figur 6 wird gezeigt, dass das Schälwerkzeug 5 während der Bearbeitung derart verschwenkt bzw. verdreht wird, dass eine Schneideverdrehung des Schälwerkzeuges 5 durchgeführt wird. Insbesondere aus Figur 6 wird deutlich, dass die Verschwenkung um ein der Schneide 6 abgewandtes Ende des Schälwerkzeuges 5 erfolgt. Demzufolge führt das Schälwerkzeug 5 während des Schäldrehprozesses zusätzlich eine verfahrensspezifische Schneideverdrehung aus, welche es ermöglicht, dass beim Schäldrehen eine axiale Zustellung während der Bearbeitung durch das Schälwerkzeug 5 ermöglicht wird. Es ist jedoch ebenso möglich, dass die axiale Zustellung des Schälwerkzeuges 5 nach dem radialen Zurückstellen des Schälwerkzeuges 5 bzw. des Blechpaketes 2, welches in Figur 7 dargestellt ist, durchgeführt wird.

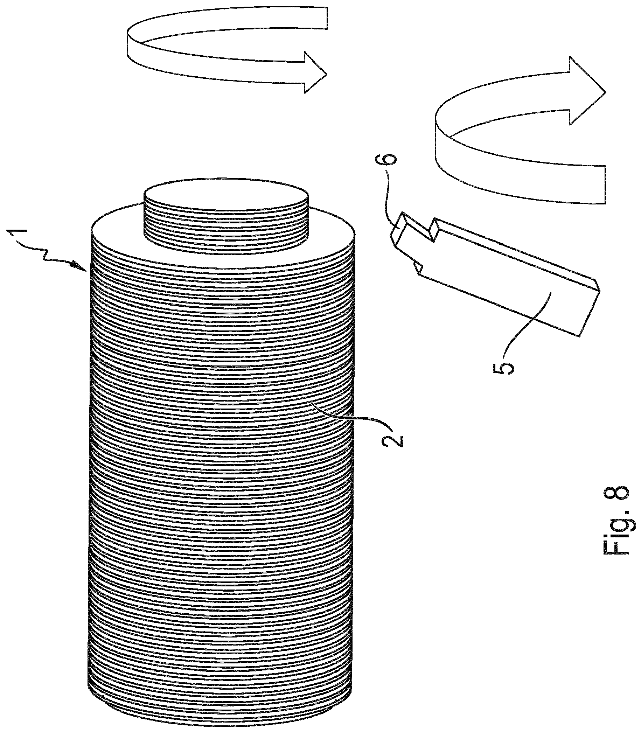

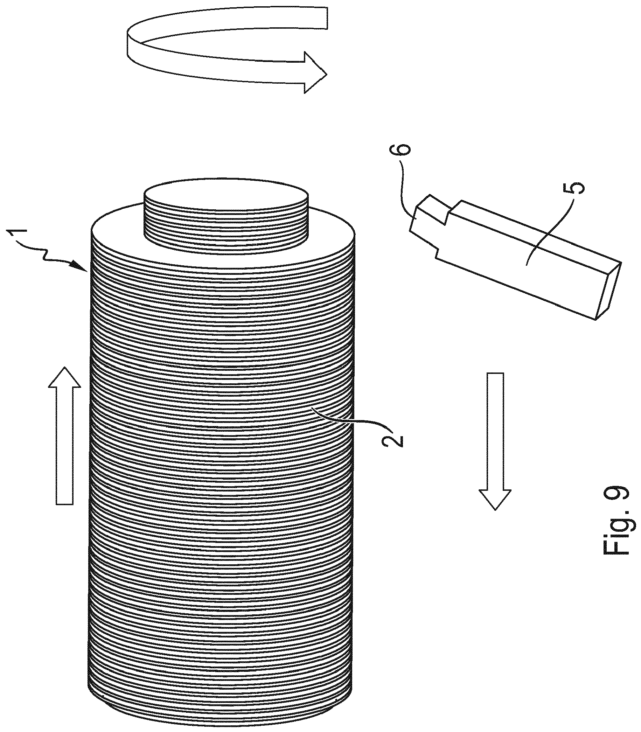

In Figur 8 ist die Schneideverdrehung in ihre Ausgangsposition nach dem radialen Zurückstellen des Schälwerkzeuges 5 dargestellt. In Figur 9 ist die axiale Zustellung des Schälwerkzeuges 5 oder des Blechpaketes 2 beispielhaft gezeigt. Die Bearbeitung wird wiederholt, bis das gesamte Blechpaket 2 des Rotors 1 nachbearbeitet ist.

### Bezugszeichen

- 1: Rotor einer elektrischen Maschine oder eines Elektromotors
- 2: Blechpaket
- 3: Blech
- 4: Einstechwerkzeug
- 5: Schälwerkzeug
- 6: Schneide
- 7: Endmaß

## Patentansprüche

1. Verfahren zum mechanischen Bearbeiten eines Blechpaketes (2) eines Rotors (1) einer elektrischen Maschine, **dadurch gekennzeichnet, dass** eine Außenoberfläche oder eine Innenoberfläche des Blechpaketes (2) des Rotors (1) mittels Einstechdrehen oder Schäldrehen bearbeitet wird, sodass ein vorbestimmtes Endmaß (7) als Außendurchmesser oder als Innendurchmesser an dem Blechpaket (2) des Rotors (1) realisiert wird.

2. Verfahren nach Anspruch 1, **dadurch gekennzeichnet, dass** zum Bearbeiten der Außenoberfläche oder der Innenoberfläche des Blechpaketes (2) des rotierenden Rotors (1) zumindest ein Einstechwerkzeug (4) oder zumindest ein Schälwerkzeug (5) verwendet wird.

3. Verfahren nach Anspruch 2, **dadurch gekennzeichnet, dass** das Einstechwerkzeug (4) oder das rotierende Blechpaket (2) radial zugestellt wird, sodass die Außenoberfläche oder die Innenoberfläche des Blechpaketes (2) des Rotors (1) auf das vorbestimmte Endmaß (7) bearbeitet wird, dass nach Erreichen des vorbestimmten Endmaßes (7) an dem Außendurchmesser oder an dem Innendurchmesser des Blechpaketes (2) das Einstechwerkzeug (4) oder das Blechpaket (4) des Rotors (1) radial zurückgestellt wird, dass anschließend das Einstechwerkzeug (4) oder das Blechpaket (2) des Rotors (1) axial zugestellt werden, sodass dem Einstechwerkzeug (4) eine unbearbeitete Außenoberfläche oder Innenoberfläche des Blechpaketes (2) des Rotors (1) zugeordnet wird und dass zum weiteren Bearbeiten das Einstechwerkzeug (4) oder das Blechpaket (2) des Rotors (1) wieder radial zugestellt wird.

4. Verfahren nach Anspruch 2 oder 3, **dadurch gekennzeichnet, dass** die Bearbeitung durch das Einstechwerkzeug (4) derart wiederholt wird, bis die gesamte Breite der zu bearbeitenden Außenoberfläche oder Innenoberfläche des Blechpaketes (2) des Rotors (1) das vorbestimmte Endmaß (7) aufweist.

5. Verfahren nach Anspruch 2, **dadurch gekennzeichnet, dass** zum Bearbeiten das Schälwerkzeug (5) oder das rotierende Blechpaket (2) radial zugestellt wird, sodass die Außenoberfläche oder die Innenoberfläche des Blechpaketes (2) des Rotors (1) auf das vorbestimmte Endmaß (7) bearbeitet wird.

6. Verfahren habe Anspruch 5, **dadurch gekennzeichnet, dass** das Schälwerkzeug (5) während der Bearbeitung derart geschwenkt wird, dass eine Schneideverdrehung des Schälwerkzeuges (5) durchgeführt wird.

7. Verfahren nach Anspruch 5 oder 6, **dadurch gekennzeichnet, dass** nach Erreichen des vorbestimmten Endmaßes (7) an dem Außendurchmesser oder an dem Innendurchmesser des Blechpaketes (2) das Schälwerkzeug (5) oder das Blechpaket (2) des Rotors (1) radial zurückgestellt wird, dass anschließend das Schälwerkzeug (5) oder das Blechpaket (2) des Rotors (1) axial zugestellt werden, sodass dem Schälwerkzeug (5) eine zu bearbeitete Außenoberfläche oder Innenoberfläche des Blechpaketes (2) des Rotors (1) zugeordnet wird und dass das Schälwerkzeug (5) oder das Blechpaket (2) des Rotors (1) zum weiteren Bearbeiten wieder radial zugestellt wird.

8. Verfahren nach Anspruch 5 oder 6, **dadurch gekennzeichnet, dass** das Schälwerkzeug (5) oder das Blechpaket (2) des Rotors (1) während der Bearbeitung axial zugestellt wird und dass nach Erreichen des vorbestimmten Endmaßes (7) an dem Außendurchmesser oder an dem Innendurchmesser des Blechpaketes (2) das Schälwerkzeug (5) oder das Blechpaket (2) des Rotors (1) radial zurückgestellt wird.

9. Verfahren nach einem der Ansprüche 5 bis 8, **dadurch gekennzeichnet, dass** die Bearbeitung durch das Schälwerkzeug (5) derart wiederholt wird, bis die gesamte Breite der zu bearbeitenden Außenoberfläche oder Innenoberfläche des Blechpaketes (2) des Rotors (1) das vorbestimmte Endmaß (7) aufweist.

10. Verfahren nach Eingang der vorangehenden Ansprüche, **dadurch gekennzeichnet, dass** das Blechpaket (2) des Rotors (1) durch mehrere axial nebeneinander angeordnete und miteinander verbundene und voneinander isolierte Bleche (3) gebildet wird.

11. Rotor (1) einer elektrischen Maschine mit einem aus mehreren axial nebeneinander angeordneten und voneinander isolierten Blechen (3) gebildeten Blechpaket (2), **dadurch gekennzeichnet, dass** der mittels Schäldrehen oder Einstechdrehen nachbearbeitete Außendurchmesser oder der Innendurchmesser des Blechpaketes (2) ein vorbestimmtes Endmaß (7) aufweist.
